# EUROPEAN PATENT SPECIFICATION

(11) **EP 3 552 922 B1**
(45) Date of publication and mention of the grant of the patent: **17.08.2022**
(21) Application number: 16923568.6
(22) Date of filing: 21.12.2016
(51) Int. Cl.: B62B 7/08, B62B 7/00

(54) **TWO-PERSON STROLLER**
ZWEI-PERSONEN-KINDERWAGEN
POUSSETTE DOUBLE

(30) Priority: 06.12.2016 CN 201611113538
(43) Date of publication of application: 16.10.2019
(73) Proprietor: Goodbaby Child Products Co., Ltd, Kunshan, Jiangsu 215331 (CN)
(72) Inventor: HU, Kouzhen, Kunshan Jiangsu 215331 (CN); FANG, Sa, Kunshan Jiangsu 215331 (CN)
(74) Representative: SSM Sandmair
(86) International application number: PCT/CN2016/111257
(87) International publication number: WO 2018/103140

(56) References cited:
- EP-A2- 2 684 764
- CN-U- 201 784 657
- CN-U- 205 344 999
- CN-U- 206 384 009
- GB-A- 2 472 305
- JP-A- H09 263 246
- US-A- 4 706 986
- US-A1- 2013 264 787
- US-B1- 6 267 406

## Description

### FIELD OF INVENTION

The present invention relates to a stroller, in particular, to a double stroller.

### BACKGROUND OF THE INVENTION

With the growing number of two-child families, double strollers are becoming more and more popular. A double stroller in the prior art, comprises a stroller frame having an unfolded position and a folded position, at least one front wheel assembly and rear wheel assemblies disposed at a lower portion of the stroller frame, a seat assembly disposed on the stroller frame and capable of supporting a human body, and a locking device for locking the stroller frame in the unfolded position. The existing double stroller has a wide variety of stroller frames, the numbers of rod pieces of the stroller frame are different, the connection relationship and the connection position of the rod pieces are different, and therefore, the folding principle and the folding manner are different. Limited by the structure of the existing stroller frame, the current double stroller is not compact enough after being folded, and takes up a large space, and is not easy to carry and transport.

US20130264787A1 discloses a stroller including a stroller frame, a front seat assembly, and a rear seat assembly. The stroller frame includes two side support assembly disposed oppositely. A front seat space and a rear seat space are formed between the two side support assemblies. The rear seat assembly is detachably and height-adjustably disposed between the two side support assemblies and located in the rear seat space, for performing a function of adjusting a sitting height of a child sitting on the rear seat assembly. GB2472305A discloses a tandem stroller comprising a frame, a pair of front and rear seats disposed on said frame, a plurality of front wheels, and a plurality of rear wheels, said frame including a side rod unit, a pair of front leg rods connected to said side rod unit, a pair of rear leg rods connected to said side rod unit, and a push rod, said front and rear wheels being disposed respectively on said front and rear leg rods, said push rod being connected to said rear leg rods; wherein said front seat includes a front seat plate disposed on said frame, and a front backrest connected to and disposed behind said front seat plate; and wherein said rear seat includes a rear seat plate disposed behind said front seat and above said front seat plate, and a rear backrest connected to said frame and disposed in front of said rear seat plate.

US6267406B1 discloses a folding-collapsible double-seat baby stroller includes two front wheel frames, a handle, two stepped top frames and two stepped bottom frames bilaterally horizontally coupled between the front wheel frames and the handle, the top frames and bottom frames each having a higher rear side and a lower front side, two rear wheel frames respectively pivoted to the top frames, two support frames bilaterally coupled between the rear wheel frames and the handle, a front seat mounted on the front side of the bottom frames, a rear seat mounted on the rear side of the bottom frames above the elevation of the front seat, and a locking mechanism adapted to lock the handle and the support frames, keeping the folding-collapsible double-seat baby stroller in the extended position.

EP2684764A discloses a stroller comprising: a front leg; a middle leg located rearward of the front leg; a rear leg located rearward of the middle leg; a front-wheel holding mechanism provided on the front leg, the front-wheel holding mechanism being configured to rotatably and turnably hold a front wheel; a middle-wheel holding mechanism provided on the middle leg, the middle-wheel holding mechanism being configured to rotatably and unturnably hold a middle wheel; and a rear-wheel holding mechanism provided on the rear leg, the rear-wheel holding mechanism being configured to rotatably and turnably hold a rear wheel.

### SUMMARY OF THE INVENTION

The present invention is aimed at providing a double stroller that has a simple structure, is easy to be folded and operated, and has a small volume after folding.

To solve the above technical problems, a technical solution employed by the present invention is: a double stroller, comprises a stroller frame having an unfolded state and a folded state, at least one front wheel assembly disposed at a front portion of a bottom of the stroller frame, two rear wheel assemblies disposed at a rear portion of the bottom of the stroller frame, and a lock mechanism for locking the stroller frame in the unfolded state, the stroller frame comprises two side frames provided at right and left sides respectively, and a transverse brace assembly connected between the side frames on both sides, and the side frame of each side comprises a front support rod gradually inclining upward from front to back, a rear support rod extending along an up-down direction, a sliding element slidably disposed on the rear support rod in a manner so as to slide in the up-down direction, and a push rod extending in an up-down direction with a lower portion being pivotally connected to the sliding element, and the side frame of each side further comprises a front seat rod and a rear seat rod respectively extending in a front-rear direction, a front portion of the front seat rod is pivotally connected to the front support rod, the rear seat rod is pivotally connected to the rear support rod, a front portion of the rear seat rod is pivotally connected to a rear portion of the front seat rod, and a rear portion of the rear seat rod is pivotally connected to the push rod, and lower portions of the front support rods on both sides are rotatably connected to each other, and the transverse brace assembly is disposed between the side frames on both sides and capable of folded along a left-right direction,

when folding the stroller frame, the front seat rod and the rear seat rod of the side frame of each side is turned and folded along the front-rear direction and the sliding element slides downward along the rear support rod, such that the front support rod, the rear support rod, the front seat rod, the rear seat rod and the push rod are drawn close to each other along the front-rear direction to achieve the folding of the side frame, the transverse brace assembly is folded such that the side frames on both sides are drawn close to each other along the left-right direction, and the front wheel assembly and the rear wheel assembly are drawn close to each other along the front-rear direction.

Preferably, when the stroller frame is in the unfolded state, the front seat rod and the rear seat rod extend along a same length direction.

Preferably, when folding the stroller frame, on the side frame of each side, a rear end portion of the front seat rod and a front end portion of the rear seat rod move upward together such that the front seat rod and the rear seat rod are turned with respect to each other along the front-rear direction and gradually drawn close to each other.

Preferably, the front portion of the front seat rod is pivotally connected to the front support rod via a first shaft, the rear portion of the front seat rod is pivotally connected with the front portion of the rear seat rod via a second shaft, the rear seat rod is pivotally connected to the rear support rod via a third shaft, and the rear portion of the rear seat rod is pivotally connected to the push rod via a fourth shaft, and when the stroller frame is unfolded, the first shaft, the second shaft, the third shaft and the fourth shaft are sequentially distributed at intervals along the front-rear direction.

Further, the sliding element is a sliding sleeve slidably sleeved on the rear support rod, a position where the sliding sleeve is on the rear support rod is located below the third shaft, and a position where the fourth shaft is on the push rod is located above the sliding sleeve.

Preferably, lower portions of the front support rods on both sides are connected to form an U-shape with an opening upward, and there is one set of front wheel assembly and the front wheel assembly is connected with the lower portions of the front support rods on both sides; there are two sets of rear wheel assemblies respectively disposed at bottoms of the rear support rods on both sides.

Preferably, the stroller frame further comprises a front backrest assembly disposed between rear portions of the front seat rods on both sides, and a rear backrest assembly disposed between rear portions of the rear seat rods on both sides, the front backrest assembly and the front seat rods on both sides form a first seat, and the rear backrest assembly and the rear seat rods on both sides form a second seat.

Preferably, the transverse brace assembly comprises at least one cross-shaped brace assembly that comprises two inclined brace rods intersecting with each other and pivotally connected at the intersection point, each of the inclined brace rods extends along an up-down direction, an upper portion of each inclined brace rod is rotatably connected to the rear support rod of one side, and a lower portion of this inclined brace rod is rotatably connected to the sliding element.

Further, the transverse brace assembly further comprises a rear attachment brace assembly disposed between the push rods on both sides and being unfoldable and foldable along the left-right direction.

Preferably, the front wheel assembly comprises a front wheel frame and front wheels disposed at a bottom of the front wheel frame, and lower portions of the front support rods on both sides are respectively pivotally connected to the front wheel frame, or lower portions of the front support rods on both sides are rotatably connected to the front wheel frame around a same center line of rotation.

As another preferable embodiment, there are two sets of front wheel assemblies respectively disposed at bottoms of the front support rods on both sides, and the lower portions of the front support rods on both sides are pivotally connected.

Due to the use of the above technical solutions, the present invention has the following advantages over the prior art: in the double stroller of the present invention, the stroller has few rod pieces and a simple structure, has a good rigidity in an unfolded state, and may set two seats in tandem to provide supports for two children to sit stably, and has a large space for the children sitting in the stroller frame and has a high sitting comfortability. The unfolding and folding operations of the double stroller are also convenient, and the volume thereof after folding is small, which provides convenience for daily storage and carrying of the user.

### BRIEF DESCRIPTION OF THE DRAWINGS

Fig. 1 is sterodiagram of a double stroller in an unfolded state of Embodiment 1 of the present invention;
Fig. 2 is a side view of the double stroller in the unfolded state of Embodiment 1;
Fig. 3 is a sterodiagram of the double stroller in a half-folded state of Embodiment 1;
Fig. 4 is a side view of the double stroller in the half-folded state of Embodiment 1;
Fig. 5 is a sterodiagram of the double stroller in a folded state of Embodiment 1;
Fig. 6 is a side view of the double stroller in the folded state of Embodiment 1;
Fig. 7 is a sterodiagram of a double stroller in an unfolded state of Embodiment 2 of the present invention;
Fig. 8 is a side view of the double stroller in the unfolded state of Embodiment 2;
Fig. 9 is a sterodiagram of the double stroller in a half-folded state of Embodiment 2;
Fig. 10 is a side view of the double stroller in the half-folded state of Embodiment 2;
Fig. 11 is a sterodiagram of the double stroller in a folded state of Embodiment 2;
Fig. 12 is a side view of the double stroller in the folded state of Embodiment 2;

Wherein, 100 - side frame; 1 - front support rod; 2 - rear support rod; 3 - push rod; 4 - front seat rod; 5 - rear seat rod; 6 - sliding element (sliding sleeve); 7 - cross-shaped brace assembly; 71 - inclined brace rod; 8 - front backrest assembly; 81 - front backrest rod; 9 - rear backrest assembly; 91 - rear back rest rod; 10 - rear attachment brace assembly; 20 - front wheel assembly ; 20a - front wheel frame; 20b - front wheel; 20c - pin shaft; 30 - rear wheel assembly; 11 - first shaft; 12 - second shaft; 13 - third shaft; 14 - fourth shaft; 15 - rotatory shaft;
1a - connecting crossbar; 16 - connecting shaft.

### DETAILED DESCRIPTION OF EXEMPLARY EMBODIMENTS

In the following, the technical solution of the present invention is further set forth combining the accompanying drawings with the specific embodiments.

### Embodiment 1

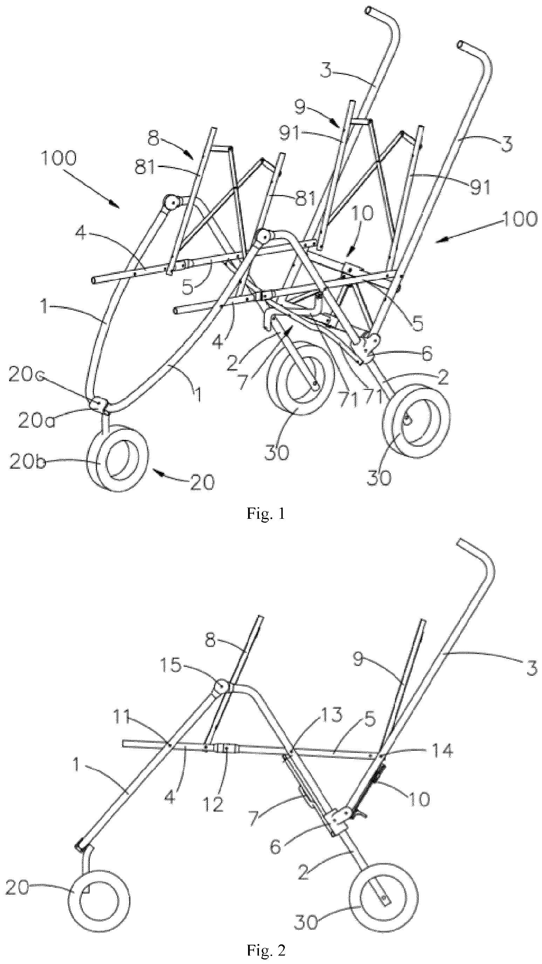

Referring to Figs 1 to 6, a double stroller comprises a stroller frame having an unfolded state and a folded state, at least one front wheel assembly 20 disposed at a front portion of a bottom of the stroller frame, rear wheel assemblies 30 disposed at a rear portion of the bottom of the stroller frame, and a lock mechanism for locking the stroller frame in the unfolded state. The stroller frame comprises two side frames 100 provided at right and left sides respectively, and a transverse brace assembly connected between the side frames 100 on both sides.

Referring to Figs 1 to 6, the side frame 100 of each side comprises a front support rod 1, a rear support rod 2, a push rod 3, a front seat rod 4 and a rear seat rod 5, wherein, the front support rod 1 gradually inclines upward from front to back, the rear support rod 2 aslant extends along an up-down direction, and an upper portion of the rear support rod 2 is pivotally connected with an upper portion of the front support rod 1 via a rotatory shaft 15; the push rod 3 aslant extends in the up-down direction and a lower portion thereof being pivotally connected to a sliding element 6, and the sliding element 6 is disposed on the rear support rod 2 in a manner so as to slide in the up-down direction, and here, the sliding element 6 employs a sliding sleeve 6 slidably sleeved on the rear support rod 2.

The front seat rod 4 and the rear seat rod 5 respectively extend in a front-rear direction, a front portion of the front seat rod 4 is pivotally connected to the front support rod 1 via a first shaft 11, and a rear portion of the front seat rod 4 is pivotally connected with a front portion of the rear seat rod 5 via a second shaft 12; a middle portion of the rear seat rod 5 is pivotally connected to the rear support rod 2 via a third shaft 13, and a rear portion of the rear seat rod 5 is pivotally connected to the push rod 3 via a fourth shaft 14. When the stroller frame is unfolded, the front seat rod 4 and the rear seat rod 5 extend along a same length direction, and the first shaft 11, the second shaft 12, the third shaft 13 and the fourth shaft 14 are sequentially distributed at intervals along the front-rear direction, wherein, a position where the first shaft 11 is on the front support rod 1 is below the rotatory shaft 15, a position where the sliding sleeve 6 is on the rear support rod 2 is disposed below the third shaft 13, and a position where the fourth shaft 14 is on the push rod 3 is located above the sliding sleeve 6.

Referring to the figures, the stroller in the present embodiment is a three-wheel stroller, the front wheel assembly 20 is disposed to be one set, and there are two sets of rear wheel assemblies 30 respectively disposed at left and right sides respectively. Specifically, each front support rod 1 is an arc-shaped rod, and lower portions of the front support rods 1 on both sides are connected to form an U-shape with an opening upward, the front wheel assembly 20 is connected with the lower portions of the front support rods 1 on both sides, and the two sets of rear wheel assemblies 30 are respectively disposed at bottoms of the rear support rods 2 on both sides.

Referring to the figures, the stroller frame further comprises a front backrest assembly 8 disposed between rear portions of the front seat rods 4 on both sides, and a rear backrest assembly 9 disposed between rear portions of the rear seat rods 5 on both sides. The front backrest assembly 8 has two front backrest rods 81 respectively disposed at the left and right sides and both extending along the up-down direction, and a front connecting rod group connected between the two front backrest rods 81 on both sides, and a lower portion of the front backrest rod 81 is pivotally connected to the rear portion of the front seat rod 4 at the same side thereto; the rear backrest assembly 9 has two rear backrest rods 91 respectively disposed at the left and right sides and both extending along the up-down direction, and a rear connecting rod group connected between the two rear backrest rods 91 on both sides, and a lower portion of the rear backrest rod 91 is pivotally connected to the rear portion of the rear seat rod 5 at the same side thereto. When unfolding the stroller frame, the front backrest assembly 8 and the front seat rods 4 on both sides form a first seat that may provide a sitting position for one child to sit, and the rear backrest assembly 9 and the rear seat rods 5 on both sides form a second seat that may provide a sitting position for another child to sit. Such that the stroller may provide two seats in tandem for two children to sit in the stroller when the stroller is unfolded.

Referring to the figures, in the present embodiment, the lower portions of the front support rods 1 on both sides are rotatably connected, and a transverse brace assembly is disposed between the side frames 100 on both sides in a manner that it is foldable along the left-right direction. Specifically:

The front wheel assembly comprises a front wheel frame 20a and front wheels 20b disposed at a bottom of the front wheel frame 20a, and lower portions of the front support rods 1 on both sides are respectively pivotally connected to the front wheel frame 20a, or lower portions of the front support rods 1 on both sides are rotatably connected to the front wheel frame 20a around a same center line of rotation. Here, the lower portions of the front support rods 1 on both sides are pivotally connected to the front wheel frame 20a via a pin shaft 20c such that when the transverse brace assembly are folded along the left-right direction, the front support rods 1 on both sides are rotatable about the pin shaft 20c to get close to each other.

The transverse brace assembly comprises a cross-shaped brace assembly 7 that comprises two inclined brace rods 71 intersecting with each other and pivotally connected at the intersection point, each of the inclined brace rods 71 aslant extends substantially along the up-down direction. An upper portion of each inclined brace rod 71 is rotatably connected to the rear support rod 2 on one side, and a lower portion thereof is rotatably connected to the sliding element 6 on the other side. When the sliding sleeve 6 slides up and down along the rear support rod 2, it will drive the two inclined brace rods 71 of the cross-shaped brace assembly 7 to rotate with respect to each other such that the cross-shaped brace assembly 7 gets unfolded or folded along the left-right direction.

The transverse brace assembly further comprises a rear attachment brace assembly 10 disposed between the push rods 3 on both sides and being unfoldable and foldable along the left-right direction. Here, the rear attachment brace assembly 10 employs the attachment brace assemblies with a unfolding self-locking function that are frequently used in the art, and when being unfolded, may provide a stable support on the left-right direction for the push rods 3 on both sides. Of course, the rear attachment brace assembly 10 also may employ a structure that can achieve unfolding and folding in the left-right direction.

Moreover, in order to cooperate with the unfolding and folding of the stroller frame in the left-right direction, the front connecting rod group of the front backrest assembly 8 and the rear connecting rod group of the rear backrest assembly 9 are both rod group structures that may get folded along the left-right direction.

Referring to Fig. 1 and Fig. 2, when the double stroller is unfolded in use, the stroller frame is locked in the unfolded state through the lock mechanism, and the rear attachment brace assembly 10 and the cross-shaped brace assembly 7 supports along the left-right direction between the side frames 100 on both sides. On each of the side frame 100, the front seat rod 4 and the rear seat rod 5 extend in the same length direction, and the front support rod 1, the rear support rod 2, the front seat rod 4 and the rear seat rod 5 form a stable triangular structure, and the push rod 3, the rear support rod 2 and the rear seat rod 5 form another stable triangular structure, which makes the stroller frame have a good rigidity and stability in the unfolded state.

On the stroller frame, the front seat rod 4 and the rear seat rod 5 can be disposed in a large extension length in the front-rear direction, so that a large seating space for two children can be formed, so that in the double stroller each of the two seats provided for children to sit in tandem has a large space, thereby improving the comfort of seating for children.

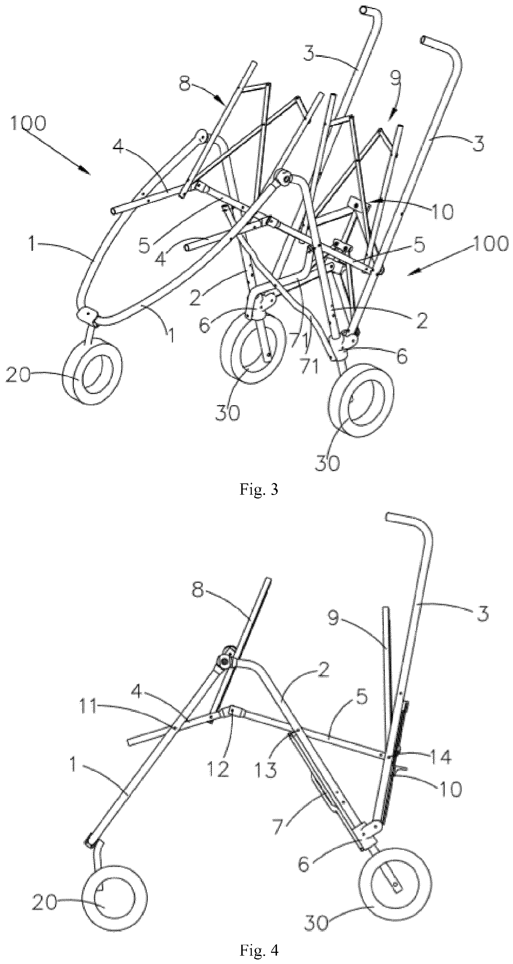

When the stroller needs to be folded up, as shown in Fig. 3 and Fig. 4, after unlocking the rear attachment brace assembly 10 and the lock mechanism, the operator holds the push rods 3 on both sides and presses them down, in this way, on the side frame 100 on each side, the push rod 3 moves downward to drive the sliding sleeve 6 to slide down along the rear support rod 2, so that the rear seat rod 5 rotates about the fourth shaft 14 relative to the push rod 3 and about the third shaft 13 relative to the rear support rod 2, and the front portion of the rear seat rod 5 moves upward and drives the rear portion of the front seat rod 4 to move upward, so that the front seat rod 4 rotates about the first shaft 11 relative to the front support rod 1, and the front seat rod 4 and the rear seat rod 5 are turned and folded in the front-rear direction gradually, driving the front support rod 1, the rear support 2 and the push rod 3 to gradually close together in the front-rear direction.

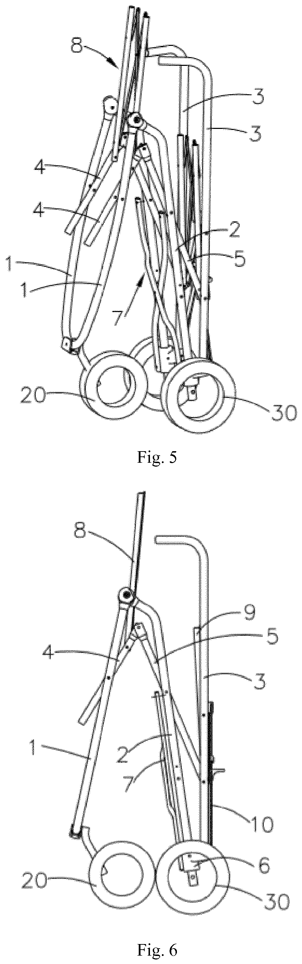

In the above process, the lower portions of the inclined brace rods 71 of the cross-shaped brace assembly 7 move downward with the sliding sleeve 6 to bring the rear support rods 2 on both sides to get drawn together in the left-right direction, and the push rods 3 on both sides are drawn close gradually during the process the rear attachment brace assembly 10 get folded at the left-right direction, the front support rods 1 on both sides are rotated around the pin shaft 20c and gradually drawn close together in the left-right direction, so that the side frames 100 on both sides are gradually drawn close in the left-right direction, and the front backrest assembly 8 and the rear backrest assembly 9 are also folded between the side frames 100 on both sides during the above folding process, and the front wheel assembly 20 and the rear wheel assembly 30 are gradually drawn close together in the front-rear direction. Finally, the folded stroller frame is shown in Fig. 5 and Fig. 6, the rods on the stroller frame are tightly gathered together, showing a very compact structure, which takes up less space, and the folded frame can rely on the front wheel assembly 20 and the rear wheel assembly 30 to stand on the ground for convenient daily storage and carrying.

When it is necessary to open the double stroller, the operator stands behind the stroller, and the foot is stepped on the lower portion of the rear attachment brace assembly 10 such that the rear attachment brace assembly 10 is gradually unfolded in the left-right direction while the push rod 3 is lifted upwardly such that the sliding sleeve 6 is slid upward along the rear support 2, so that the rods on the stroller frame are rotated with respect to each other to gradually get unfolded. The unfolding operations of the double stroller are also convenient.

### Embodiment 2

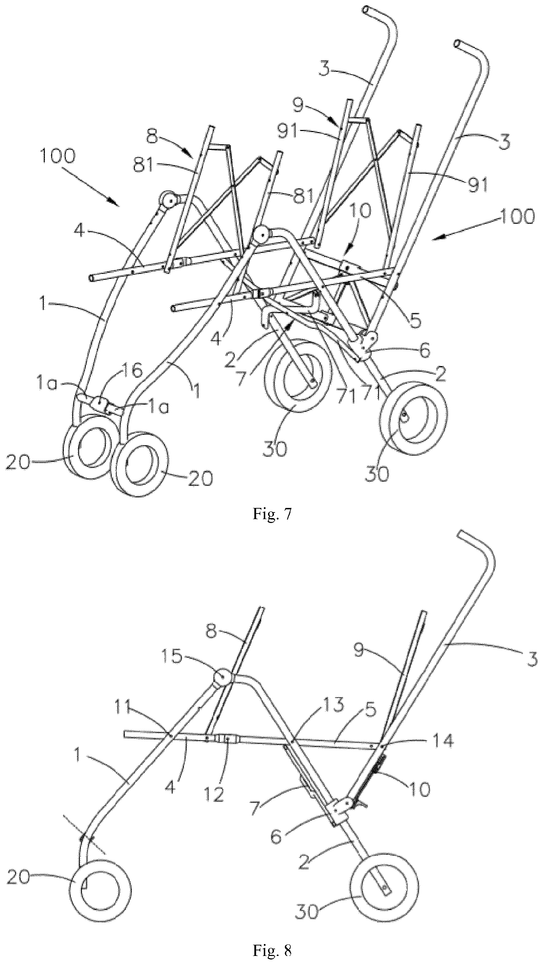

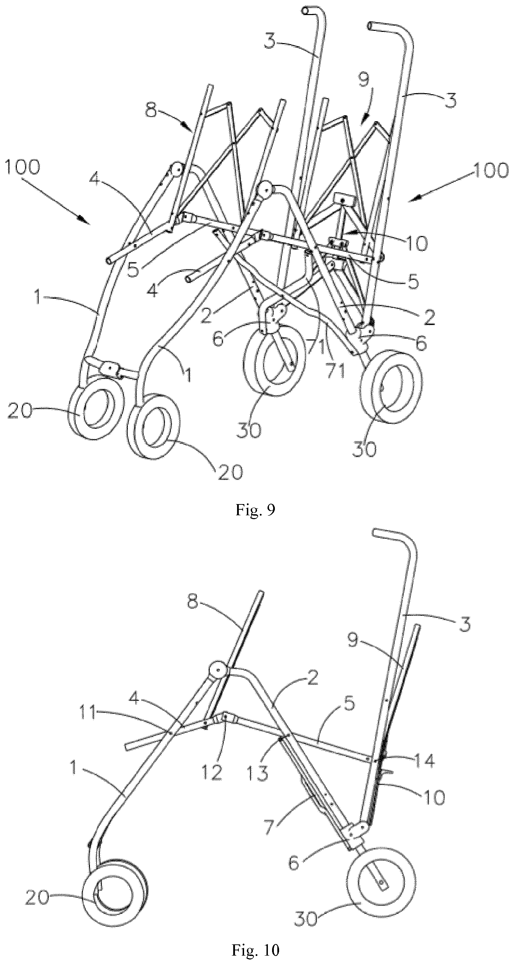

Referring to the double stroller shown in Fig. 7 to Fig. 12, the main difference from Embodiment 1 is the connection form of the front support rods 1 on both sides and the arrangement of the front wheel assembly 20.

Referring to Fig. 7 to Fig. 12, in the present embodiment, there are two sets of front wheel assemblies 20, and the two sets of front wheel assemblies 20 are respectively disposed at the bottoms of the front support rods 1 on both sides. The lower portion of the front support rod 1 on each side has a connecting crossbar la extending inward in the left-right direction, and the connecting crossbars 1a on both sides are pivotally connected via a connecting shaft 16.

When unfolding the frame, the side frames 100 on both sides are respectively unfolded, and the cross-shaped brace assembly 7 of the transverse brace assembly and the rear attachment brace assembly 10 are spread between the side frames 100 on both sides, and the connecting crossbars 1a at the lower portions of the front support rods 1 on both sides are also unfolded in the left-right direction.

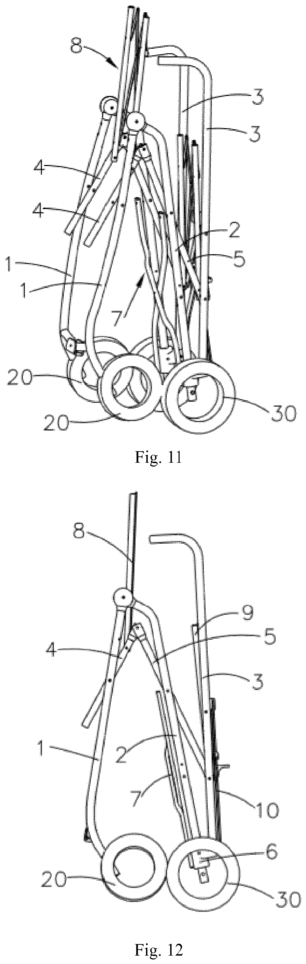

When folding the frame, the side frames 100 on both sides are respectively folded, and the cross-shaped brace assembly 7 of the transverse brace assembly and the rear attachment brace assembly 10 are also respectively folded along the left-right direction, so that the side frames 100 on both sides are gradually drawn close in the left-right direction, and the front support rods 1 on both sides are rotated about the connecting shaft 16 and gradually drawn close in the left-right direction. The folded frame is as shown in Fig. 11 and Fig. 12, and the folded frame is compact in structure and can rely on two sets of front wheel assemblies 20 and two sets of rear wheel assemblies 30 to stand on the ground.

Above all, in the double stroller of the present invention, the stroller has few rod pieces and a simple structure, has a good rigidity in an unfolded state, and may set two seats in tandem to provide supports for two children to sit stably, and has a large space for the children sitting in the stroller frame with a high sitting comfortability. The unfolding and folding operations of the double stroller are also convenient, and the volume thereof after folding is small, which provides convenience for daily storage and carrying of the user.

The above words of locality, such as up, down, front, rear, left, and right, are defined in a state in which the stroller frame is in an unfolded state, and the position where the front wheel assembly 20 is front, and the position where the rear wheel assembly 30 is rear.

The embodiments described above are only for illustrating the technical concepts and features of the present invention, and are intended to make those skilled in the art being able to understand the present invention and thereby implement it, and should not be concluded to limit the protective scope of this disclosure.

## Claims

1. A double stroller, comprising a stroller frame having an unfolded state and a folded state, at least one front wheel assembly (20) disposed at a front portion of a bottom of the stroller frame, two rear wheel assemblies (30) disposed at a rear portion of the bottom of the stroller frame, and a lock mechanism for locking the stroller frame in the unfolded state, wherein the stroller frame comprises two side frames (100) provided at right and left sides respectively, and a transverse brace assembly connected between the side frames (100) on both sides, the side frame (100) of each side comprises a front support rod (1) gradually inclining upward from front to back, a rear support rod (2) extending along an up-down direction, a sliding element (6) slidably disposed on the rear support rod (2) in a manner so as to slide in the up-down direction, and a push rod (3) extending in an up-down direction with a lower portion being pivotally connected to the sliding element (6), is **characterized in that**, the side frame (100) of each side further comprises a front seat rod (4) and a rear seat rod (5) respectively extending in a front-rear direction, a front portion of the front seat rod (4) is pivotally connected to the front support rod (1), the rear seat rod (5) is pivotally connected to the rear support rod (2), a front portion of the rear seat rod (5) is pivotally connected to a rear portion of the front seat rod (4), and a rear portion of the rear seat rod (5) is pivotally connected to the push rod (3), and lower portions of the front support rods (1) on both sides are rotatably connected to each other, and the transverse brace assembly is disposed between the side frames (100) on both sides and capable of folded along a left-right direction,
when folding the stroller frame, the front seat rod (4) and the rear seat rod (5) of the side frame (100) of each side is turned and folded along the front-rear direction and the sliding element (6) slides downward along the rear support rod (2), such that the front support rod (1), the rear support rod (2), the front seat rod (4), the rear seat rod (5) and the push rod (3) are drawn close to each other along the front-rear direction to achieve the folding of the side frame (100), the transverse brace assembly is folded such that the side frames (100) on both sides are drawn close to each other along the left-right direction, and the front wheel assembly (20) and the rear wheel assembly (30) are drawn close to each other along the front-rear direction.

2. The double stroller according to claim 1, is **characterized in that**, when the stroller frame is in the unfolded state, the front seat rod (4) and the rear seat rod (5) extend along a same length direction.

3. The double stroller according to claim 1, is **characterized in that**, when folding the stroller frame, on the side frame (100) of each side, a rear end portion of the front seat rod (4) and a front end portion of the rear seat rod (5) move upward together such that the front seat rod (4) and the rear seat rod (5) are turned with respect to each other along the front-rear direction and gradually drawn close to each other.

4. The double stroller according to claim 1, is **characterized in that**, the front portion of the front seat rod (4) is pivotally connected to the front support rod (1) via a first shaft (11), the rear portion of the front seat rod (4) is pivotally connected with the front portion of the rear seat rod (5) via a second shaft (12), the rear seat rod (5) is pivotally connected to the rear support rod via a third shaft (13), and the rear portion of the rear seat rod (5) is pivotally connected to the push rod (3) via a fourth shaft (14), and when the stroller frame is unfolded, the first shaft (11), the second shaft (12), the third shaft (13) and the fourth shaft (14) are sequentially distributed at intervals along the front-rear direction.

5. The double stroller according to claim 4, is **characterized in that**, the sliding element (6) is a sliding sleeve slidably sleeved on the rear support rod (2), a position where the sliding sleeve is on the rear support rod is located below the third shaft (13), and a position where the fourth shaft (14) is on the push rod (3) is located above the sliding sleeve.

6. The double stroller according to claim 1, is **characterized in that**, lower portions of the front support rods (1) on both sides are connected to form an U-shape with an opening upward, and there is one set of front wheel assembly (20) and the front wheel assembly (20) is connected with the lower portions of the front support rods (1) on both sides; there are two sets of rear wheel assemblies (30) respectively disposed at bottoms of the rear support rods (2) on both sides.

7. The double stroller according to claim 1, is **characterized in that**, the stroller frame further comprises a front backrest assembly (8) disposed between rear portions of the front seat rods (4) on both sides, and a rear backrest assembly (9) disposed between rear portions of the rear seat rods (5) on both sides, the front backrest assembly (8) and the front seat rods (4) on both sides form a first seat, and the rear backrest assembly (9) and the rear seat rods (5) on both sides form a second seat.

8. The double stroller according to any one of claims 1 to 7, is **characterized in that**, the transverse brace assembly comprises at least one cross-shaped brace assembly (7) that comprises two inclined brace rods (71) intersecting with each other and pivotally connected at the intersection point, each of the inclined brace rods (71) extends along an up-down direction, an upper portion of each inclined brace rod (71) is rotatably connected to the rear support rod (2) on one side, and a lower portion thereof is rotatably connected to the sliding element (6).

9. The double stroller according to claim 8, is **characterized in that**, the transverse brace assembly further comprises a rear attachment brace assembly (10) disposed between the push rods (3) on both sides and being unfoldable and foldable along the left-right direction.

10. The double stroller according to claim 1, is **characterized in that**, the front wheel assembly (20) comprises a front wheel frame (20a) and front wheels (20b) disposed at a bottom of the front wheel frame (20a), and lower portions of the front support rods (1) on both sides are respectively pivotally connected to the front wheel frame (20a), or lower portions of the front support rods (1) on both sides are rotatably connected to the front wheel frame (20a) around a same center line of rotation.

11. The double stroller according to claim 1, is **characterized in that**, there are two sets of front wheel assemblies (20) respectively disposed at bottoms of the front support rods (1) on both sides, and the lower portions of the front support rods (1) on both sides are pivotally connected.

## Patentansprüche

1. Doppel-Kinderwagen mit einem Kinderwagenrahmen mit einem aufgeklappten Zustand und einem zusammengeklappten Zustand, mindestens einer Vorderradanordnung (20), die an einem vorderen Abschnitt einer Unterseite des Kinderwagenrahmens angeordnet ist, zwei Hinterradanordnungen (30), die an einem hinteren Abschnitt der Unterseite des Kinderwagenrahmens angeordnet sind, und einem Verriegelungsmechanismus zum Verriegeln des Kinderwagenrahmens im aufgeklappten Zustand, wobei der Kinderwagenrahmen zwei Seitenrahmen (100) umfasst, die jeweils auf der rechten und linken Seite vorgesehen sind, und einer Querstrebenanordnung, die zwischen den Seitenrahmen (100) auf beiden Seiten eingebunden ist, wobei der Seitenrahmen (100) jeder Seite eine vordere Stützstange (1) umfasst, die sich allmählich von vorne nach hinten nach oben neigt, eine hintere Stützstange (2), die sich entlang einer Oben-Unten-Richtung erstreckt, ein Gleitelement (6), das verschiebbar an der hinteren Stützstange (2) so angeordnet ist, dass es in der Oben-Unten-Richtung gleitet, und eine Schubstange (3), die sich in einer Oben-Unten-Richtung erstreckt, wobei ein unterer Abschnitt schwenkbar mit dem Gleitelement (6) verbunden ist, **dadurch gekennzeichnet, dass** der Seitenrahmen (100) jeder Seite ferner eine vordere Sitzstange (4) und eine hintere Sitzstange umfasst (5), die sich jeweils in einer Vorne-Hinten-Richtung erstrecken, wobei ein vorderer Abschnitt der vorderen Sitzstange (4) schwenkbar mit der vorderen Stützstange (1) verbunden ist, die hintere Sitzstange (5) schwenkbar mit der hinteren Stützstange verbunden ist (2), ein vorderer Abschnitt der hinteren Sitzstange (5) schwenkbar mit einem hinteren Abschnitt der vorderen Sitzstange (4) verbunden ist und ein hinterer Abschnitt der hinteren Sitzstange (5) schwenkbar mit der Schubstange (3) verbunden ist, und untere Abschnitte der vorderen Stützstangen (1) auf beiden Seiten drehbar miteinander verbunden sind, und die Querstrebenanordnung zwischen den Seitenrahmen (100) auf beiden Seiten angeordnet ist und entlang einer Links-Rechts-Richtung gefaltet werden kann, wobei
beim Zusammenklappen des Kinderwagengestells die vordere Sitzstange (4) und die hintere Sitzstange (5) des Seitenrahmens (100) jeder Seite entlang der Vorne-Hinten-Richtung gedreht und gefaltet wird und das Gleitelement (6) nach unten entlang der hinteren Stützstange (2) gleitet, so dass die vordere Stützstange (1), die hintere Stützstange (2), die vordere Sitzstange (4), die hintere Sitzstange (5) und die Schubstange (3) entlang der Vorne-Hinten-Richtung nahe zueinander gezogen werden, um das Falten des Seitenrahmens (100) zu erreichen, wobei die Querstrebenanordnung so gefaltet wird, dass die Seitenrahmen (100) auf beiden Seiten entlang der Links-Rechts-Richtung nahe zueinander gezogen werden, und die Vorderradanordnung (20) und die Hinterradanordnung (30) entlang der Vorne-Hinten-Richtung nahe zueinander gezogen werden.

2. Doppelkinderwagen nach Anspruch 1, **dadurch gekennzeichnet, dass**, wenn sich das Kinderwagengestell im aufgeklappten Zustand befindet, die vordere Sitzstange (4) und die hintere Sitzstange (5) sich entlang einer gleichen Längenrichtung erstrecken.

3. Doppelkinderwagen nach Anspruch 1, **dadurch gekennzeichnet, dass** beim Zusammenklappen des Kinderwagengestells am Seitenrahmen (100) jeder Seite ein hinterer Endabschnitt der Vordersitzstange (4) und ein vorderer Endabschnitt der Hinteren Sitzstange (5) sich zusammen nach oben bewegen, so dass die vordere Sitzstange (4) und die hintere Sitzstange (5) relativ zueinander entlang der Vorne-Hinten-Richtung gedreht und allmählich nahe zueinander gezogen werden.

4. Doppelkinderwagen nach Anspruch 1, **dadurch gekennzeichnet, dass** der vordere Abschnitt der vorderen Sitzstange (4) schwenkbar mit der vorderen Stützstange (1) über eine erste Welle (11) verbunden ist, der hintere Abschnitt der vorderen Sitzstange (4) schwenkbar über eine zweite Welle (12) mit dem vorderen Abschnitt der hinteren Sitzstange (5) verbunden ist, wobei die hintere Sitzstange (5) schwenkbar mit der hinteren Stützstange über eine dritte Welle (13) verbunden ist und der hintere Abschnitt der hinteren Sitzstange (5) schwenkbar mit der Schubstange (3) über eine vierte Welle (14) verbunden ist, und wenn das Kinderwagengestell aufgeklappt ist, die erste Welle (11), die zweite Welle (12), die dritte Welle (13) und die vierte Welle (14) nacheinander in Abständen entlang der Vorne-Hinten-Richtung verteilt sind.

5. Doppelkinderwagen nach Anspruch 4, **dadurch gekennzeichnet, dass** das Gleitelement (6) eine Gleithülse ist, die verschiebbar auf der hinteren Stützstange (2) angeordnet ist, wobei eine Position, wo die Gleithülse auf der hinteren Stützstange ist, unterhalb der dritten Welle (13) angeordnet ist, und eine Position, wo die vierte Welle angeordnet ist (14) sich auf der Schubstange (3) oberhalb der Gleithülse befindet.

6. Doppelkinderwagen nach Anspruch 1, **dadurch gekennzeichnet, dass** untere Abschnitte der vorderen Stützstangen (1) auf beiden Seiten verbunden sind, um eine U-Form mit einer Öffnung nach oben zu bilden, und es einen Vorderradanordnungssatz (20) gibt und die Vorderradanordnung (20) mit den unteren Abschnitten der vorderen Stützstangen (1) auf beiden Seiten verbunden ist; wobei es zwei Sätze von Hinterradanordnungen (30) gibt, die jeweils an Unterteilen der hinteren Stützstangen (2) auf beiden Seiten angeordnet sind.

7. Doppelkinderwagen nach Anspruch 1, **dadurch gekennzeichnet, dass** der Kinderwagenrahmen ferner eine vordere Rückenlehnenanordnung (8), die zwischen hinteren Abschnitten der vorderen Sitzstangen (4) auf beiden Seiten angeordnet ist, und eine hintere Rückenlehnenanordnung (9) umfasst, die zwischen hinteren Abschnitten der hinteren Sitzstangen (5) auf beiden Seiten angeordnet ist, wobei die vordere Rückenlehnenanordnung (8) und die vorderen Sitzstangen (4) auf beiden Seiten einen ersten Sitz bilden, und die hintere Rückenlehnenanordnung (9) und die hinteren Sitzstangen (5) auf beiden Seiten einen zweiten Sitz bilden.

8. Doppelkinderwagen nach einem der Ansprüche 1 bis 7, **dadurch gekennzeichnet, dass** die Querstrebe mindestens eine kreuzförmige Strebe (7) umfasst, die zwei sich kreuzende und im Kreuzungspunkt schwenkbar verbundene geneigte Strebenstangen (71) umfasst, wobei sich jede der geneigten Strebenstangen (71) entlang einer Oben-Unten-Richtung erstreckt, ein oberer Abschnitt jeder geneigten Strebenstange (71) drehbar mit der hinteren Stützstange (2) auf einer Seite verbunden ist und ein unterer Abschnitt davon drehbar mit dem Gleitelement (6) verbunden ist.

9. Doppelkinderwagen nach Anspruch 8, **dadurch gekennzeichnet**, die Querstrebenanordnung ferner eine hintere Befestigungsstrebenanordnung (10) umfasst, die zwischen den Schubstangen (3) auf beiden Seiten angeordnet ist und entlang der Links-Rechts-Richtung entfaltbar und faltbar ist.

10. Doppelkinderwagen nach Anspruch 1, **dadurch gekennzeichnet, dass** die Vorderradanordnung (20) einen Vorderradrahmen (20a) und Vorderräder (20b) umfasst, die an einer Unterseite des Vorderradrahmens (20a) angeordnet sind, und untere Abschnitte der vorderen Stützstangen (1) auf beiden Seiten jeweils schwenkbar mit dem Vorderradrahmen (20a) verbunden sind, oder untere Abschnitte der vorderen Stützstangen (1) auf beiden Seiten um eine gleiche Rotationsmittellinie drehbar mit dem Vorderradrahmen (20a) verbunden sind.

11. Doppel-Kinderwagen nach Anspruch 1, **dadurch gekennzeichnet, dass** zwei Sätze von Vorderradanordnungen (20) jeweils an Unterteilen der vorderen Stützstangen (1) auf beiden Seiten angeordnet sind, und die unteren Abschnitten der vorderen Stützstangen (1) auf beiden Seiten schwenkbar verbunden sind.

## Revendications

1. Poussette double, comprenant un châssis de poussette ayant un état déplié et un état plié, au moins un ensemble roue avant (20) disposé au niveau d'une partie avant d'un bas du châssis de poussette, deux ensembles roue arrière (30) disposés au niveau d'une partie arrière du bas du châssis de poussette, et un mécanisme de verrouillage pour verrouiller le châssis de poussette à l'état déplié, dans laquelle le châssis de poussette comprend deux châssis latéraux (100) prévus respectivement au niveau de côtés droit et gauche, et un ensemble renfort transversal raccordé entre les châssis latéraux (100) sur les deux côtés, le châssis latéral (100) de chaque côté comprend une tige de support avant (1) s'inclinant progressivement vers le haut de l'avant vers arrière, une tige de support arrière (2) s'étendant suivant une direction haut-bas, un élément coulissant (6) disposé de façon coulissante sur la tige de support arrière (2) de manière à coulisser dans la direction haut-bas, et une tige de poussée (3) s'étendant dans une direction haut-bas avec une partie inférieure qui est raccordée de façon pivotante à l'élément coulissant (6), **caractérisée en ce que** le châssis latéral (100) de chaque côté comprend en outre une tige de siège avant (4) et une tige de siège arrière (5) s'étendant respectivement dans une direction avant-arrière, une partie avant de la tige de siège avant (4) est raccordée de façon pivotante à la tige de support avant (1), la tige de siège avant (5) est raccordée de façon pivotante à la tige de support arrière (2), une partie avant de la tige de siège avant (5) est raccordée de façon pivotante à une partie arrière de la tige de siège avant (4), et une partie arrière de la tige de siège arrière (5) est raccordée de façon pivotante à la tige de poussée (3), et des parties inférieures des tiges de support avant (1) sur les deux côtés sont raccordées de façon rotative l'une à l'autre, et l'ensemble renfort transversal est disposé entre les châssis latéraux (100) sur les deux côtés et peut être plié suivant une direction gauche-droite,
lors du pliage du châssis de poussette, la tige de siège avant (4) et la tige de siège arrière (5) du châssis latéral (100) de chaque côté sont tournées et repliées suivant la direction avant-arrière et l'élément coulissant (6) coulisse vers le bas suivant la tige de support arrière (2), de sorte que la tige de support avant (1), la tige de support arrière (2), la tige de siège avant (4), la tige de siège arrière (5) et la tige de poussée (3) sont rapprochées les unes aux autres suivant la direction avant-arrière pour obtenir le pliage du châssis latéral (100), l'ensemble renfort transversal est plié de sorte que les châssis latéraux (100) sur les deux côtés sont rapprochés l'un de l'autre suivant la direction gauche-droite, et l'ensemble roue avant (20) et l'ensemble roue arrière (30) sont rapprochés l'un de l'autre suivant la direction avant-arrière.

2. Poussette double selon la revendication 1, **caractérisée en ce que**, lorsque le châssis de poussette est à l'état déplié, la tige de siège avant (4) et la tige de siège arrière (5) s'étendent suivant une même direction de longueur.

3. Poussette double selon la revendication 1, **caractérisée en ce que**, lors du pliage du châssis de poussette, sur le châssis latéral (100) de chaque côté, une partie d'extrémité arrière de la tige de siège avant (4) et une partie d'extrémité avant de la tige de siège arrière (5) se déplacent ensemble vers le haut de sorte que la tige de siège avant (4) et la tige de siège arrière (5) sont tournées l'une par rapport à l'autre suivant la direction avant-arrière et progressivement rapprochées l'une de l'autre.

4. Poussette double selon la revendication 1, **caractérisée en ce que** la partie avant de la tige de siège avant (4) est raccordée de façon pivotante à la tige de support avant (1) par l'intermédiaire d'un premier arbre (11), la partie arrière de la tige de siège avant (4) est raccordée de façon pivotante à la partie avant de la tige de siège arrière (5) par l'intermédiaire d'un deuxième arbre (12), la tige de siège arrière (5) est raccordée de façon pivotante à la tige de support arrière par l'intermédiaire d'un troisième arbre (13), et la partie arrière de la tige de siège arrière (5) est raccordée de façon pivotante à la tige de poussée (3) par l'intermédiaire d'un quatrième arbre (14), et lorsque le châssis de poussette est déplié, le premier arbre (11), le deuxième arbre (12), le troisième arbre (13) et le quatrième arbre (14) sont répartis séquentiellement à intervalles suivant la direction avant-arrière.

5. Poussette double selon la revendication 4, **caractérisée en ce que** l'élément coulissant (6) est un manchon coulissant manchonné de façon coulissante sur la tige de support arrière (2), une position où le manchon coulissant se trouve sur la tige de support arrière est située en dessous du troisième arbre (13), et une position où le quatrième arbre (14) se trouve sur la tige de poussée (3) est située au-dessus du manchon coulissant.

6. Poussette double selon la revendication 1, **caractérisée en ce que** des parties inférieures des tiges de support avant (1) sur les deux côtés sont raccordées pour former une forme en U avec une ouverture vers le haut, et il y a un jeu d'ensemble roue avant (20) et l'ensemble roue avant (20) est raccordé aux parties inférieures des tiges de support avant (1) sur les deux côtés ; il y a deux jeux d'ensembles roue arrière (30) disposés respectivement au bas des tiges de support arrière (2) sur les deux côtés.

7. Poussette double selon la revendication 1, **caractérisée en ce que** le châssis de poussette comprend en outre un ensemble dossier avant (8) disposé entre des parties arrière des tiges de siège avant (4) sur les deux côtés, et un ensemble dossier arrière (9) disposé entre des parties arrière des tiges de siège arrière (5) sur les deux côtés, l'ensemble dossier avant (8) et les tiges de siège avant (4) sur les deux côtés forment un premier siège, et l'ensemble dossier arrière (9) et les tiges de siège arrière (5) sur les deux côtés forment un second siège.

8. Poussette double selon l'une quelconque des revendications 1 à 7, **caractérisée en ce que** l'ensemble renfort transversal comprend au moins un ensemble renfort en forme de croix (7) qui comprend deux tiges de renfort inclinées (71) se croisant l'une l'autre et raccordées de façon pivotante au point d'intersection, chacune des tiges de renfort inclinées (71) s'étend suivant une direction haut-bas, une partie supérieure de chaque tige de renfort inclinée (71) est raccordée de façon rotative à la tige de support arrière (2) sur un côté, et une partie inférieure de celle-ci est raccordée de façon rotative à l'élément coulissant (6).

9. Poussette double selon la revendication 8, **caractérisée en ce que** l'ensemble renfort transversal comprend en outre un ensemble renfort de fixation arrière (10) disposé entre les tiges de poussée (3) sur les deux côtés et dépliable et pliable suivant la direction gauche-droite.

10. Poussette double selon la revendication 1, **caractérisée en ce que** l'ensemble roue avant (20) comprend un châssis de roue avant (20a) et des roues avant (20b) disposées au bas du châssis de roue avant (20a), et les parties inférieures des tiges de support avant (1) sur les deux côtés sont respectivement raccordées de façon pivotante au châssis de roue avant (20a), ou des parties inférieures des tiges de support avant (1) sur les deux côtés sont raccordées de façon rotative au châssis de roue avant (20a) autour d'un même axe central de rotation.

11. Poussette double selon la revendication 1, **caractérisée en ce qu'**il y a deux jeux d'ensembles roue avant (20) disposés respectivement au bas des tiges de support avant (1) sur les deux côtés, et les parties inférieures des tiges de support avant (1) sur les deux côtés sont raccordées de façon pivotante.
